Europäisches Patentamt

(19) European Patent Office

Office européen des brevets

(11) Publication number: **0 028 941**

A1

(12) **EUROPEAN PATENT APPLICATION**

(21) Application number: **80304051.8**

(22) Date of filing: **12.11.80**

(51) Int. Cl.³: **B 65 B 7/18**
**B 65 D 5/08, B 65 D 5/70**

(30) Priority: **12.11.79 GB 7939097**

(43) Date of publication of application:
**20.05.81 Bulletin 81/20**

(84) Designated Contracting States:
**AT BE CH DE FR GB IT LI NL SE**

(71) Applicant: **NOVUS CORP. N.V.**
*Handelskade 8*
**Curacao Netherlands Antilles(NL)**

(72) Inventor: **Mosse, Richard Wolfgang Emil**
**28 CLifton Hill**
**London, N.W.8.(GB)**

(74) Representative: **Burrows, Anthony Gregory**
**Haseltine Lake & Co. Hazlitt House 28 Southampton**
**Buildings Chancery Lane**
**London, WC2 1AT(GB)**

(54) **Packaging.**

⑤⑦ A gable-topped carton has its top closure heat-sealed by heating to a tacky consistency, at a first heating stage, those portions of thermoplastics internal surfaces of its lateral sealing sub-panels 31 and 33 above the level of the ends of the end sealing sub-panels 32 and 34 and thermoplastics internal surfaces of the corner regions among the sub-panels 31 to 34, and, at a second heating stage, the aforesaid portions of the internal surfaces of its lateral sealing sub-panels 31 and 33 and thermoplastics external surfaces of the sub-panels 32 and 34, and then pressure-sealing the tacky surface portions together to form a sealing fin. The heating of the sub-panel 32 which is to form a pouring spout is such that the internal surface thereof is rendered tacky from the adjacent corner regions along to, but not beyond, two lines of weakness 20 intermediate the centre and the respective ends of the sub-panel 32, which lines of weakness 20 aid in forming the spout.

EP 0 028 941 A1

./...

Fig.2.

Fig.3.

1.

PACKAGING.

According to a first aspect of the present invention, there is provided a method of sealing a carton comprising a loop of first, second, third and fourth panels arranged around the carton and having thermoplastics surfaces and interconnected by fold lines and an upwardly extending sealing seam, other fold lines extending around the carton and dividing the panels into loops of sub-panels arranged around the carton, the loops of sub-panels including a lower loop of top closure sub-panels for obturating the top of the carton and a higher loop of top closure sub-panels for forming a sealing fin, said higher loop comprising respective first, second, third and fourth sub-panels of which the second and fourth sub-panels are provided centrally with upwardly extending fold lines to form respective pairs of sub-sub-panels whereof the sub-sub-panels of each pair, in the sealed carton, have external surfaces face-to-face with each other and internal surfaces face-to-face with the other sub-panels of the higher loop, said lower loop comprising first, second, third and fourth obturating sub-panels of the respective panels, and lines of weakness in the second panel extending from locations in its uppermost edge region adjacent the corner regions among the first, second and third sealing sub-panels to that edge region of the second obturating sub-panel nearest to the middle of the second panel, said method including heating to a tacky consistency the thermoplastics external surfaces of the second and fourth sealing sub-panels, the thermoplastics internal surface portions of the first and third sealing sub-panels above the level of the tops of the end regions of the second and fourth sealing sub-panels, and the thermoplastics internal surface portions of the first, second, third and fourth sealing sub-panels below said level in the said corner regions, characterized in that the heating to a tacky consistency of said internal surface portions of the second sealing sub-panels is performed along to but not beyond substantially said lines of weakness and that there is no heating to a tacky consistency of those thermoplastics remaining portions of the internal surfaces of the first, second, and third sealing sub-panels which are to be face-to-face with one another in the sealed carton.

According to a second aspect of the present invention, there is provided a carton comprising a loop of first, second, third and fourth panels arranged around the carton and interconnected by fold lines and an upwardly extending sealing seam, other fold lines extending around the carton and dividing the panels into loops of sub-panels arranged around the carton, the loops of sub-panels including a higher loop of top closure sealing sub-panels forming a sealing fin and a lower loop of first, second, third and fourth top closure obturating sub-panels for obturating the top of the carton, upwardly extending fold lines provided centrally of the second and fourth sealing sub-panels to form respective pairs of sub-sub-panels, further fold lines extending transversely of said other fold lines and dividing the second and fourth obturating sub-panels into sub-sub-panels, said further fold lines comprising fold lines extending from the centre of that edge region of each of the second and fourth obturating sub-panels furthest from the middle of its panel to those corner zones of the sub-panel furthest from said edge region, lines of weakness in the second panel extending from locations in its uppermost edge region adjacent the corner regions among the first, second and third sealing sub-panels to that edge region of the second obturating sub-panel nearest to the middle of the second panel, whereby the portions of said second sealing sub-panel and said second obturating sub-panel between said lines of weakness can be pulled outwardly about said lines of weakness to provide a pouring spout, and a continuous seal comprised of adhesion between surface portions of said first, second, third and fourth sealing sub-panels and including adhesion in said corner regions, characterized in that the adhesion extends along the internal surface of said second sealing sub-panel from the corner regions between the first, second and third sealing sub-panels to, but not beyond, substantially said lines of weakness, and that there is substantially no adhesion between those remaining portions of the internal surface of the second sealing sub-panel, on the one hand, and the internal surface of the first and third sealing sub-panels on the other hand.

According to a third aspect of the present invention, there is provided a carton comprising a loop of first, second, third and fourth panels arranged around the carton and interconnected by fold lines and an upwardly extending sealing seam, other fold lines extending around the carton and dividing the panels into loops of sub-panels arranged around the carton, the loops of sub-panels including a higher loop of top closure sealing sub-panels forming a sealing fin and a lower loop of first, second, third and fourth top closure obturating sub-panels for obturating the top of the carton, upwardly extending fold lines provided centrally of the second and fourth sealing sub-panels to form respective pairs of sub-sub-panels, further fold lines extending transversely of said other fold lines and dividing the second and fourth obturating sub-panels into sub-sub-panels, said further fold lines comprising fold lines extending from the centre of that edge region of each of the second and fourth obturating sub-panels furthest from the middle of its panel to those corner zones of the sub-panel furthest from said edge region, lines of weakness in the second panel extending from locations in its uppermost edge region adjacent the corner regions among the first, second and third sealing sub-panels to that edge region of the second obturating sub-panel nearest to the middle of the second panel, whereby the portions of said second sealing sub-panel and said second obturating sub-panel between said lines of weakness can be pulled outwardly about said lines of weakness to provide a pouring spout, and a continuous seal comprised of adhesion between surface portions of said first, second, third and fourth sealing sub-panels and including adhesion in said corner regions, characterized in that, with said spout in a fully opened condition, the adhesion in said corner regions remains intact.

According to a fourth aspect of the present invention, there is provided an apparatus for use in sealing a top closure of a carton, comprising heating means for heating internal thermoplastics surface portions of said top closure including internal corners at upwardly extending fold lines of said top closure, said heating means including nozzle means arranged to direct hot gaseous jets into said corners, characterized in that said nozzle means is arranged to be received in said carton.

According to a fifth aspect of the present invention, there is provided a method of sealing a top closure of a carton, including heating internal thermoplastics surface portions of said top closure including internal corners at upwardly extending fold lines of said top closure, said heating including directing hot gaseous jets into said corners from nozzle means, characterized in that said nozzle means is received in said carton during said directing.

According to a sixth aspect of the present invention, there is provided an apparatus for use in sealing a top closure of a carton which closure incorporates wall means for forming a pouring spout, characterized in that it comprises heating means arranged to heat selected thermoplastics surface portions of said top closure including thermoplastics external surface portions of said wall means and pressure sealing means of a pressure sealing stage arranged to press said selected thermoplastics surface portions and said thermoplastics external surface portions together while these surface portions are tacky, characterized in that said heating means comprises first heating means of a first heating stage arranged to heat said selected thermoplastics surface portions of said top closure but not substantially to heat said thermoplastics external surface portions and thermoplastics internal surface portions of said wall means, and final heating means of a final heating stage arranged to heat said selected thermoplastics surface portions to render these surface portions tacky and also to heat said thermoplastics external surface portions to render these surface portions tacky but not substantally to heat said thermoplastics internal surface portions.

According to a seventh aspect of the present invention, there is provided a method of sealing a top closure of a carton which closure incorporates wall means for forming a pouring spout, comprising heating selected thermoplastics surface portions of said top closure including thermoplastics external surface portions of said wall means, and pressing these surface portions together while they are tacky, characterized in that said heating comprises, at a first heating stage, heating said selected thermoplastics surface portions of said top closure but not substantially heating said thermoplastics external surface portions and thermoplastics internal surface portions of said wall means, and, at a final heating stage, heating said selected thermoplastics surface portions so as to render these surface portions tacky and also heating said thermoplastics external surface portions so as to render these surface portions tacky but not substantially heating said thermoplastics internal surface portions.

In order that the invention may be clearly understood and readily carried into effect, reference will now be made, by way of example, to the accompanying drawings, in which:-

Figure 1 shows a fragmentary plan view of a gable-topped carton blank,

Figure 2 shows a fragmentary perspective view of an open-topped gable-topped carton formed from the blank and located beneath a device of a first heating stage of a machine for producing filled and sealed gable-topped cartons from blanks each according to Figure 1, the device serving to heat, and so render tacky, thermoplastics surface portions of the top closure of the carton,

Figure 3 shows a fragmentary perspective view of the carton, with those surface portions thus rendered tacky, located beneath a device of a second heating stage of the machine, which device is for simultaneously heating and cooling such surface portions of the carton,

Figure 4 is a fragmentary side elevation of the carton with its top closure sealed,

Figure 5 shows a top plan view of the carton with its top closure partly opened,

Figure 6 shows a fragmentary perspective view of the carton with its top closure opened slightly more,

Figure 7 is a top plan view of a modified version of the apparatus of Figures 2 and 3,

Figure 8 is a side elevation of the modified version,

Figure 9 is a side elevation of a heating device at a first heating stage of the modified version,

Figure 10 is an underneath plan view of this heating device,

Figure 11 shows a section taken on the line A-A of Figure 9,

Figure 12 shows a side elevation of a heating device at a second and final heating stage of the modified version,

Figure 13 shows an underneath plan view of this heating device,

Figure 14 shows a section taken on the line B-B of Figure 12,

Figure 15 shows a top plan of a carton during its passage through the first and second heating stages of Figures 2 and 3 or Figures 9 and 12,

Figure 16 shows a side elevation of a major part of the machine,

Figure 17 shows an end elevation of the major part taken from the right in Figure 16,

Figure 18 shows an end elevation of a pressure sealing device of a pressure sealing stage of the machine,

Figure 19 shows a side elevation of a pressure sealing jaw of the device of Figure 18, and

Figure 20 shows a section taken on the line XX-XX of Figure 19.

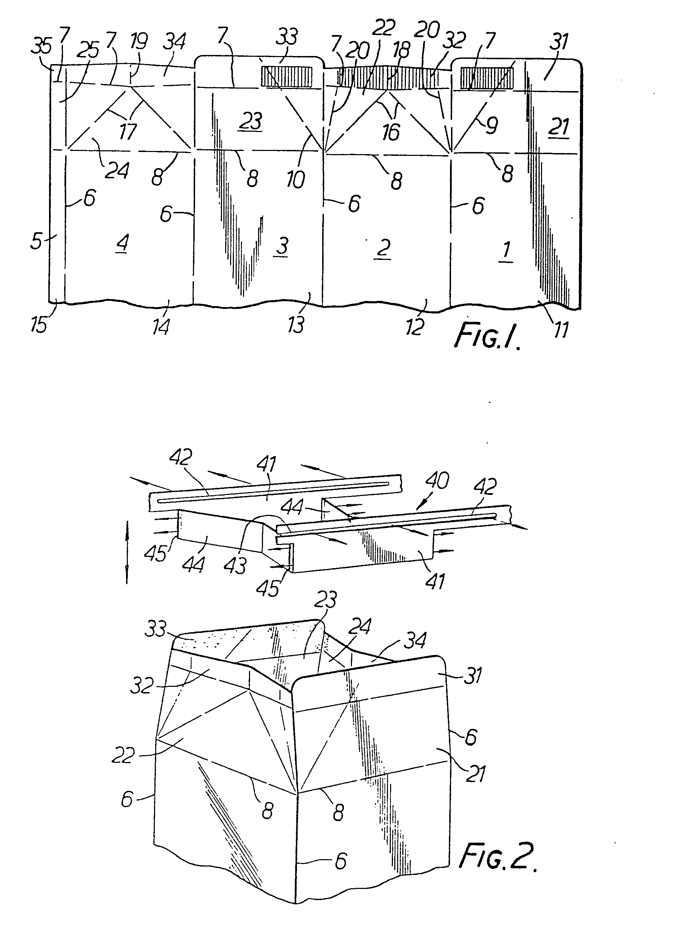

Referring to Figure 1, the carton blank is designed to form a gable-topped carton for containing a consumable liquid, for example milk or orange juice. The blank has been cut from a sheet of conventional material consisting of paperboard coated on both faces with thermoplastics. The blank consists of five panels 1 to 5, of which the panel 5 is a sealing strip which is to be heat-sealed in a conventional way to the panel 1 in an overlapping manner, in order to form a sleeve. The panels 1 to 5 are interconnected by lines of weakness in the form of respective score lines 6 extending perpendicularly to the row of panels 1 to 5. By means of score lines 7 and 8 and other score lines (not shown) extending perpendicularly to the score lines 6, the panels 1 to 5 are divided into rows of the sub-panels. These rows of sub-panels include bottom closure sub-panels (not shown), a row of side wall sub-panels 11 to 15, a row of lower top closure sub-panels 21 to 25, and a row of higher top closure sub-panels 31 to 35.

It will be appreciated that the sub-panels 21 to 25 will serve to obturate the top of the carton, while the sub-panels 31 to 35 will serve to provide a sealing fin of the gable top closure. The sub-panels 21 and 31 are formed with an oblique score line 9 extending from the corner of the sub-panel 21 nearer to the sub-panel 12 to a location about mid-way along the outer longitudinal edge of the sub-panel 31. Similarly, an oblique score line 10 extends from the corner of the sub-panel 23 nearer to the sub-panel 12 to about mid-way along the outer longitudinal edge of the sub-panel 33. The sub-panel 22 is formed with two score lines 16 which extend from the centre of its score line 7 to the corners of the sub-panel 22 nearest the sub-panels 11 and 13, respectively. Similarly, the sub-panel 24 is formed with two score lines 17 which extend from the centre of its score line 7 to its corners nearest to the sub-panels 13 and 15, respectively. A score line 18 extends from the junction of the score lines 16 across the sub-panel 32 parallelly to the score lines 6, while, similarly, score line 19 extends from the junction of the score lines 17 across the sub-panel 34 parallelly to the score lines 6. The blank as so far described is conventional. However, the sub-panels 22 and 32 are formed with two score lines 20 which commence from locations on the outer longitudinal edge of the sub-panel 32 spaced inwardly from the ends of the sub-panel 32, extend across the sub-panel 32 parallelly to the score line 6 to its score line 7, and thence extend obliquely to those corner regions of the sub-panel 22 nearest the sub-panels 11 and 13, respectively. Each score line 20 is spaced from the score line 18 along the sub-panel 32 to an extent of a major portion of the length of each sub-sub-panel into which the sub-panel 32 is divided by the score line 18, for example by an extent equal to about four-tenths of the length of the sub-panel 32.

The sleeve formed from the blank of Figure 1 has its bottom sealingly closed in a conventional manner and then has its top closure pre-broken in a conventional manner to bring the top closure to the condition shown in Figure 2. In the condition shown in Figure 2, the sub-panels 32 and 34 have been pressed inwardly slightly about the score lines 6, the sub-panels 22 and 24 have been pressed inwards slightly about the score lines 6 and their score lines 8, and the sub-panels 21, 23, 31 and 33 have been inclined inwards slightly about the relevant score lines 8. In this condition cartons are then fed one after another to the right-hand end of the major part shown in Figure 16. Two horizontal endless chains 201 turning about vertical axes partially enclose the cartons between them and advance them stepwise along a horizontal rail 202. The chains 201 are externally covered by guard panels 203. The chains advance the cartons through a plurality of filling stages 204 at which the cartons are filled piecemeal with liquid, for example milk. The chains 201 further advance the cartons through a plurality of heating stages provided by an apparatus 205, the cartons moving between a pair of water-cooled guide tubes 206 which bear against the exteriors of the upepr end zones of the panels 1 and 3 of each carton and which, at their exit ends 206', converge together to move those upper end zones of each carton towards each other. The chains now pass the cartons through a plurality of pressure sealing stages 207 which pressure seal the gable top closures of the cartons. The filled and sealed cartons are delivered by the chains 201 to an accumulator table 208.

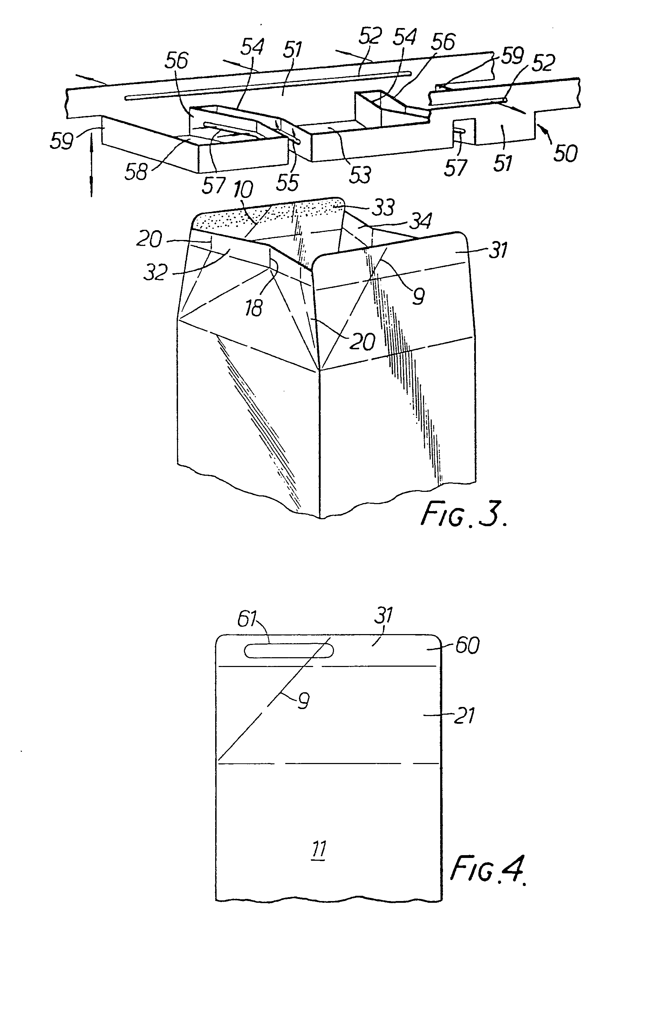

In the condition of the carton C shown in Figure 2, a heating device 40 included in the apparatus 205 is lowered to the carton. The heating device 40 comprises a chamber much of the walls of which have been shown broken away in Figure 2 to clarify the Figure. The chamber has two parallel, vertical, side walls 41, the respective lower parts of which are each of a length to be received within the open mouth of the carton at respective locations adjacent to the insides of the sub-panels 31 and 33, and the respective upper parts of which project longitudinally beyond the lower parts and are formed with respective horizontal slots 42 over most of their length. The space between the walls 41 is almost closed off by transverse walls which substantially follow the outlines of the side walls 41. These transverse walls include a horizontal bottom wall 43 and two cranked, vertical end walls 44, which are cranked complementarily to the sub-panels 32 and 34 and are of a size and shape to be received inwardly of the sub-panels 32 and 34 in Figure 2. At the four corners among the walls 41 and 44 are vertical slots 45. Hot air is fed to the chamber and issues as horizontal sheets from the slots 42 and as vertical sheets, directed substantially parallelly to the walls 41, from the slots 45. The device 40 is lowered until the walls 44 are directly to the insides of the sub-panels 32 and 34 and the slots 45 extend in the carton opposite the respective four corner regions of the mouth of the carton. The hot air from the slots 42 heats upper portions of the internal thermoplastics surfaces of the sub-panels 31 and 33, namely those portions above the level of the outer ends of the sub-panels 32 and 34, but not those portions below this level; meanwhile, the hot air from the slots 45 heats the internal thermoplastics surface portions of the sub-panels 31 to 34 in the four corner regions of the mouth of the carton; as shown in a hatched manner in Figure 2 in respect of the internal surfaces of the sub-panels 33 and 34. Such heating renders the heated surface portions tacky. The device 40 is then immediately withdrawn upwards and the carton forwarded to a combined heating and cooling device 50 shown in Figure 3. This device is somewhat similar to the device 40, having two parallel, vertical, side walls 51 formed with horizontal slots 52. However, the device 50 is divided into two chambers, one of which is bounded by the walls 51, a horizontal bottom wall 53 corresponding to the bottom wall 43, cranked, vertical walls 54 cranked identically to the walls 44, and a horizontal top wall (not shown) at the level of the tops of the walls 54. A horizontal slot 55 extends along the nearer wall 54 in Figure 3. Facing the walls 54 are respective vertical walls 56 cranked identically to the walls 54 and formed with V-shaped horizontal slots 57. Beyond these walls 56 are respective horizontal bottom walls 58 and vertical end walls 59. The spaces between the walls 54 and 56 are closed off at the top by further walls (not shown) thereby providing two cranked tunnels. Hot air is fed to the chamber bounded by the walls 51, 56, 58 and 59. It issues from the slots 52 to heat the upper internal thermoplastics surface portions of the sub-panels 31 and 33 and to heat the external thermoplastics surface portions of the sub-panels 32 and 34, all as indicated by hatching in the case of the sub-panels 32 and 33 in Figure 3. Cold air is fed, advantageously via means, such as a filter, to remove germs, to the chamber bounded by the walls 51, 53 and 54. It issues from the slot 55, which terminates sufficiently short of the walls 51 that the horizontal cold air sheet therefrom cools the inside thermoplastics surface portions of the sub-panel 32 between the score lines 20 thereof and thus prevents those inside portions from becoming tacky, in spite of the rendering tacky of the outside surface portions of the sub-panel 32. This cooling counteracts heating of those inside portions by conduction through the material and convection about the material.

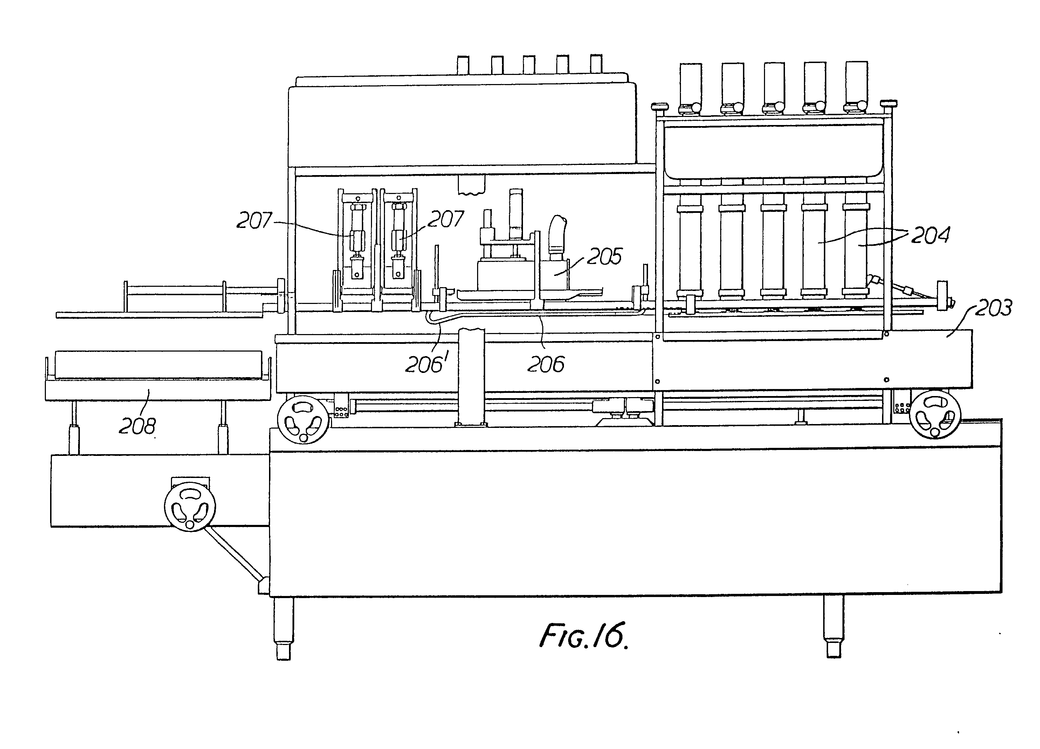

The heating of the sub-panels 31 to 34 of the carton is illustrated clearly in Figure 15, which indicates that during the first heating stage the portions HI are rendered tacky, namely the aforementioned upper portions of the internal thermoplastics surfaces of the sub-panels 31 and 33 and the internal thermoplastics surface portions of the sub-panels 31 to 34 in the aforesaid four corner regions, these portions in respect of the sub-panel 32 extending along to, but not beyond, the score lines 20. The Figure also indicates that during the second heating stage the portions HII are rendered tacky or more tacky, namely the aforementioned upper

portions and the external thermoplastics surface portions of the sub-panels 32 and 34.

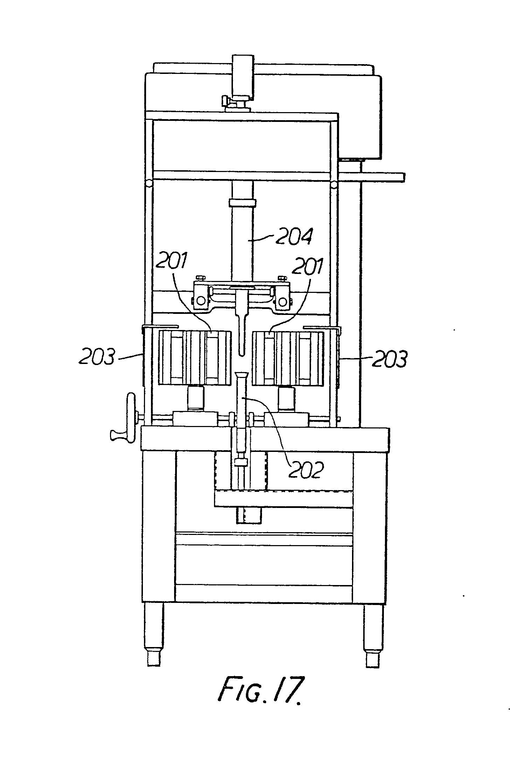

The carton is now forwarded to the first of two identical toggle-form pressure sealing devices 207 of which one is shown in Figure 18. It comprises a ram-operated rod 209 articulated by way of two links 210 to respective brackets 211 interconnected by a fixed pivot pin 212. Each bracket 211 has fixed thereto one jaw of a pair of jaws 213 shown in detail in Figures 19 and 20. Each jaw 213 has a pressure-sealing face 214 and a positioning face 215. For pressure sealing, the rod 209 swings the brackets 211 downwards about the pin 212 to bring the faces 214 into vertical positions in which the faces 214 bear on the external surfaces of the sub-panels 31 and 33 to clamp the sub-panels 31 and 33 together, with the sub-panels 32 and 34 being folded about the score lines 18 and sandwiched between the sub-panels 31 and 33 to form a sealing fin 60 (see Figure 4). The faces 215 come to bear on the inclined external surfaces of the sub-panels 21 and 23 to position the gable top closure correctly. Owing to the heating which has been performed in the stages indicated in Figures 2 and 3, the sub-panels 31 and 33 are sealed together along their tops above the sub-panels 32 and 34, the internal surfaces of the four corner regions between the sub-panels 31 to 34 are sealed together, and the external surfaces (which become the inner surfaces in the sealed top closure) of the two halves of each of the sub-panels 32 and 34 are also sealed to each other along their lengths. This provides a fluid-tight seal for the top closure, in spite of the fact that the internal surface portions (which become the outer surface portions in the sealed closure) of the sub-panel 32 between the score lines 20 are prevented from becoming sealed to the internal surfaces of the sub-panels 31 and 33 owing to having been cooled by the air from the slot 55. In order further to discourage any tendency for the internal surface portions of the sub-panel 32 between the score lines 20 to become sealed to the sub-panels 31 and 33 under the pressure of the clamping jaws 213, the clamping jaws 213 are provided with respective shallow elongate recesses 216 extending along the jaws 213, so as to relieve the pressure of those internal surface portions, these recesses 216 thus leaving a substantially uncompressed portion of the fin 60 as indicated at 61 in Figure 4.

To reduce this tendency still further, that portion of the sub-panel 32 between the score lines 20 may have its internal thermoplastics surface coated with an abhesive, in this case silicon resin, during production of the blank, while those portions of the sub-panels 31 and 33 which are co-extensive with this portion of the sub-panel 32 in the top closure may have their internal thermoplastics surfaces coated with the same abhesive at the same time. These coatings of abhesive are shown by means of parallel-line hatching in Figure 1.

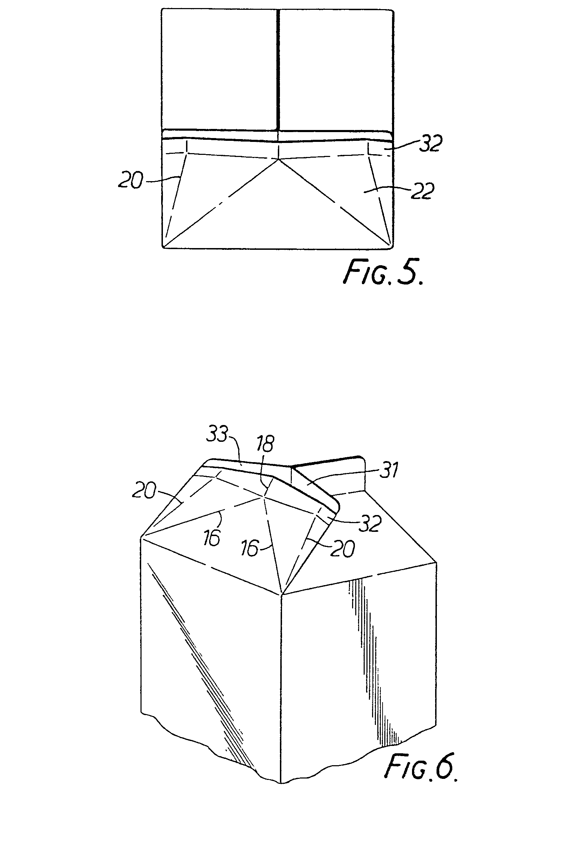

In opening the carton, a user would insert his thumbs into the recess in the gable-topped closure which is bounded by the now folded sub-panel 22 and would turn the thumbs away from each other about the score lines 9 and 10, so as to break the seal between the top halves of the sub-panel 32 and to break the seal between the sub-panels 31 and 33 along to the score lines 9 and 10, thus bringing the sub-panels 22 and 31 to a fully opened-out condition, as shown in Figure 5, forming two wings. If the user then continues to turn his thumbs slightly in the same manner, the sub-panel 32 is passed through its dead-centre position. If the user then begins to turn the wings back towards each other about the score lines 9 and 10, the centre of the sub-panel 32 will tend to move outwardly away from the sub-panels 31 and 33, as shown in Figure 6. This is because the portion of the top closure between the socre lines 20 is not adhered to the remainder of the top closure and is thus free to bend about the score lines 16 and 18 to form a pouring spout. The adhesion in the corner regions among the sub-panels 31 to 33 and along to the score lines 16 and 18 remains intact throughout opening of the pouring spout and thus promotes folding about the score lines 16 and 18.

At least some of the slots 42, 45, 52 and 57 can be so designed as to give upwardly inclined sheets of hot air, thereby more reliably restricting the heating to only those thermoplastics surface portions which are to be rendered tacky.

Instead of employing hot air heating of the top closure, it is possible to employ radiant heating.

It is possible to avoid the need to cool the internal surface portions of the sub--anel 32 between the score lines 20, this being achieved by so designing and controlling the heating means of the apparatus that these internal surface portions do not attain a temperature at which they become tacky.

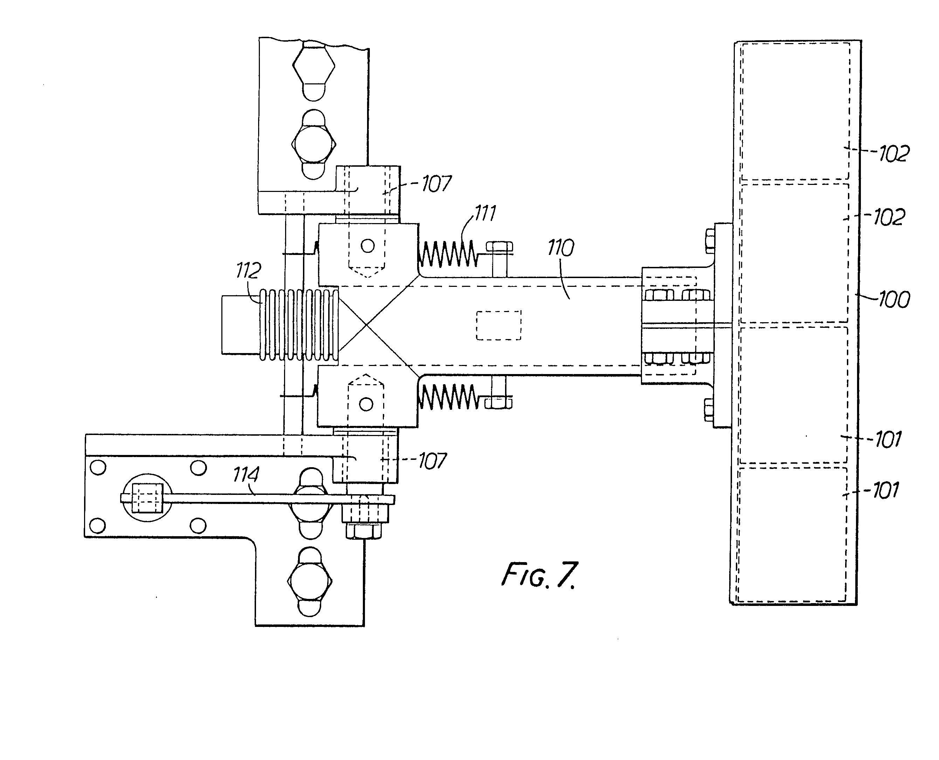

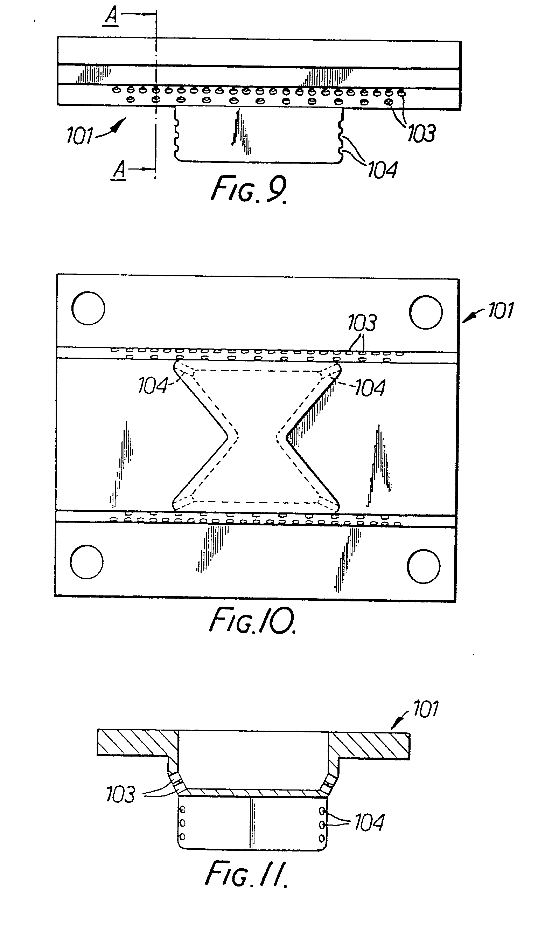

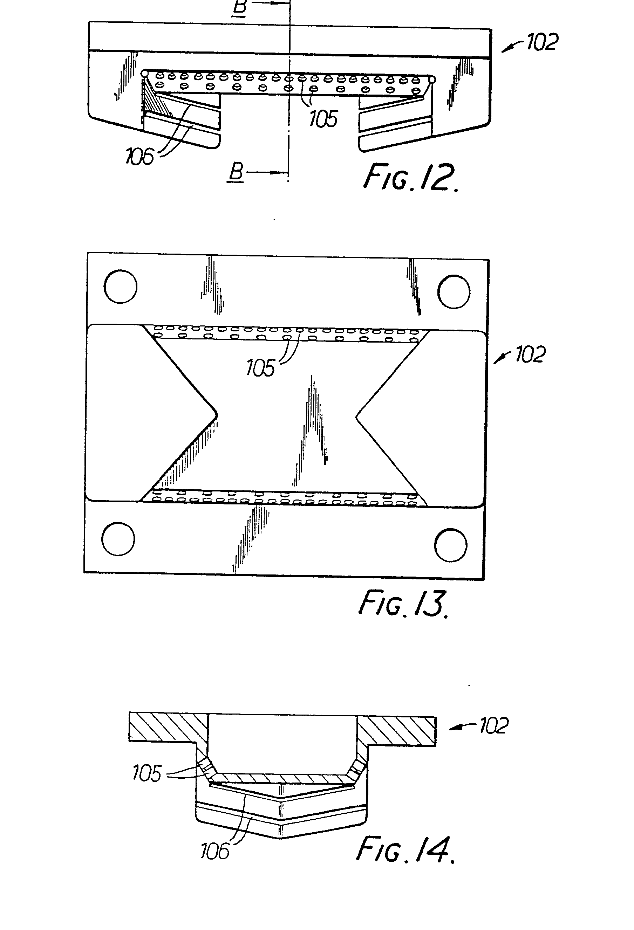

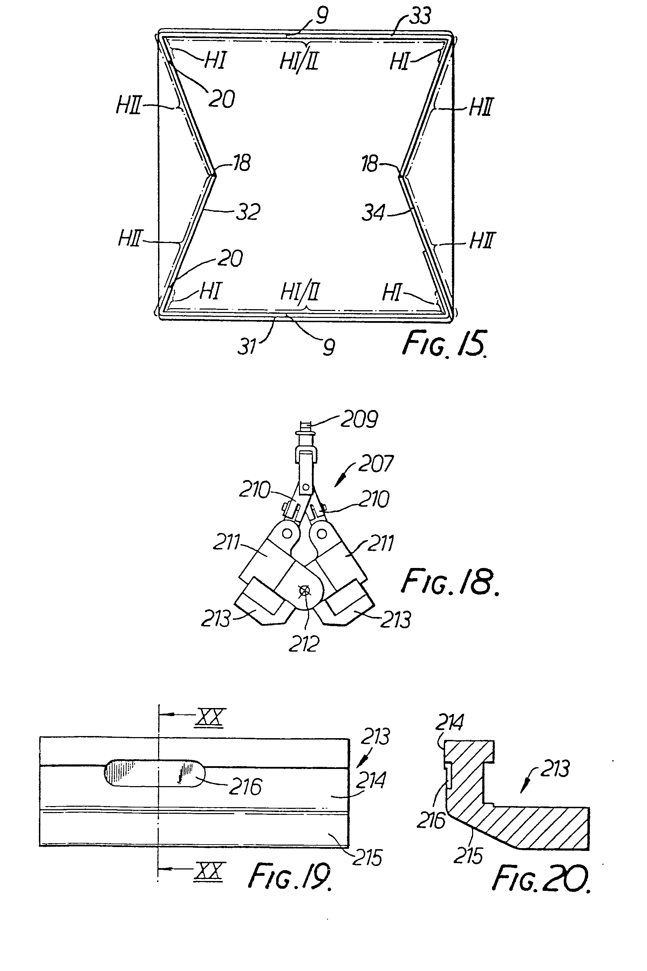

The version of Figures 7 to 14 is similar to that of Figures 2 and 3, except that there is no deliberate cooling of the open-topped carton. It includes a heating head 100 comprised of two identical heating devices 101 each of which corresponds to the device 40 and two identical heating devices 102 each of which corresponds to the device 50 less its cooling function. The slots 42 are each replaced by a double row of bores 103, each bore of which extends in a plane perpendicular to the path of advance of the cartons and is inclined downwardly at an angle of about 30$^{\text{O}}$. The slots 45 are each replaced by a row of bores 104, each bore of which extends horizontally but is directed outwardly at about 25$^{\text{O}}$ away from the

vertical plane of the path of the cartons. The slots 52 are each replaced by a double row of bores 105 each orientated identically to each bore 103. Each V-shaped slot 57 is replaced by two V-shaped slots 106 which are each directed downwardly at an angle of about 12$^{O}$ to the horizontal.

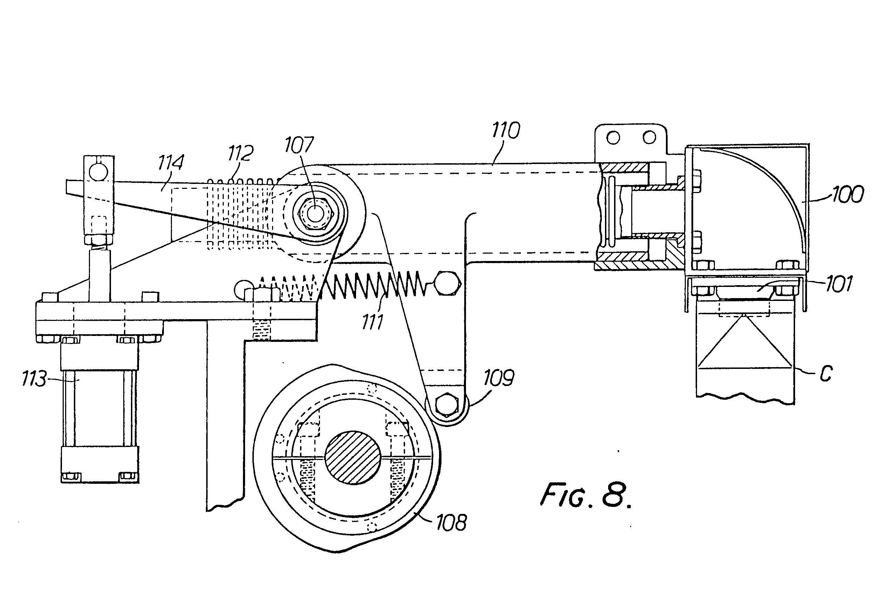

A carton C is shown in Figure 8 with the first device 101 lowered into the carton. The head 100 is raised and lowered about co-axial pins 107 and in synchronism with the stepwise advance of the cartons C by means of a rotary cam 108 acting on a roller follower 109 carried by a tubular arm 110 mounting the head 100. The cam 108 raises the head 100 just clear of the cartons advancing therebelow. Springs 111 urge the follower 109 to bear continuously against the cam 108. The interior of the arm 110 communicates _via_ a bellows hose 112 with a fixed hot-air supply pipe (not shown). It also communicates with the hollow interior of the head 100. In Figure 8 an end plate of the head 100 has been removed for ease of understanding. If and when, during operation, the stepwise carton advance is discontinued for some reason, for example automatically on misalignment of a carton, a pneumatic piston-and-cylinder device 113 is automatically actuated to swing an arm 114 downwardly about the pins 107. The arm 114 is fixed to the tubular arm 110. The arm 114 is swung downwardly through an angle sufficient to lift the head 100 well clear of the cartons C therebelow, so as to avoid the hot air being continually fed to the stationary cartons and their contents. With resumption of the stepwise advance of the cartons, the device 113 allows the head to return to its operational location.

As in the version shown in Figures 2 and 3, the head 100 does not jet hot air at the external thermoplastics surface portions of the sub-panels 32 and 34 until the devices 102 are reached by the cartons. The design and operation of the apparatus are such that there is insufficient time for enough of the heat applied to these surface portions to pass by conduction through the carton material to render tacky those inside thermoplastics surface portions of the sub-panel 32 between the score lines 20.

Instead of the heating devices being moved up and down relative to the cartons, the devices can be so designed as to remain fixed above the cartons and to jet hot air down from above onto the appropriate portions HI and HII.

CLAIMS

1. A method of sealing a carton comprising a loop of first, second, third and fourth panels (1-4) arranged around the carton and having thermoplastics surfaces and interconnected by fold lines (6) and an upwardly extending sealing seam, other fold lines (7, 8) extending around the carton and dividing the panels (1-4) into loops of sub-panels (21-24, 31-34) arranged around the carton, the loops of sub-panels including a lower loop of top closure sub-panels (21-24) for obturating the top of the carton and a higher loop of top closure sub-panels (31-34) for forming a sealing fin (60), said higher loop comprising respective first, second, third and fourth sub-panels (31-34) of which the second and fourth sub-panels (32, 34) are provided centrally with upwardly extending fold lines (18) to form respective pairs of sub-sub-panels whereof the sub-sub-anels of each pair, in the sealed carton, have external surfaces face-to-face with each other and internal surfaces face-to-face with the other sub-panels (31, 33) of the higher loop, said lower loop comprising first, second, third and fourth obturating sub-panels (21-24) of the respective panels (1-4), and lines of weakness (20) in the second panel (2) extending from locations in its uppermost edge region adjacent the corner regions among the first, second and third sealing sub-panels (31-33) to that edge region of the second obturating sub-panel (22) nearest to the middle of the second panel (2), said method including heating to a tacky consistency the thermoplastics external surfaces of the second and fourth sealing sub-panels (22, 24), the thermoplastics internal surface portions of the first and third sealing sub-panels (31, 33) above the level of the tops of the end regions of the second and fourth sealing sub-panels (32, 34), and the thermoplastics internal surface portions of the first, second, third and fourth sealing sub-panels (31-34) below said level in the said corner regions, characterized in that the heating to a tacky consistency of said internal surface portions of the second sealing sub-panel (32) is performed along to but not beyond substantially said lines of weakness (20) and that there is no heating to a tacky consistency of those thermoplastics remaining portions of the internal surfaces of the first, second, and third sealing sub-panels (31-34) which are to be face-to-face with one another in the sealed carton.

2. A method according to claim 1, characterized in that the heating is performed at a plurality of differing stages at one of which there are heated to a tacky consistency said internal surface portions of the first and third sealing sub-panels (31, 33) and said internal surface portions of the first, second, third and fourth sealing sub-panels (31, 34) below said level in said corner regions, but not said external surface of the second sealing sub-panel (32), and at a later, final one of which there is heated to a tacky consistency said external surface of the second sealing sub-panel (32).

3. A carton comprising a loop of first, second, third and fourth panels (1-4) arranged around the carton and interconnected by fold lines (6) and an upwardly extending sealing seam, other fold lines (7, 8) extending around the carton and dividing the panels (1-4) into loops of sub-panels (21-24, 31-34) arranged around the carton, the loops of sub-panels including a higher loop of top closure sealing sub-panels (31-34) forming a sealing fin (60) and a lower loop of first, second, third and fourth top closure obturating sub-panels (21-24) for obturating the top of the carton, upwardly extending fold lines (18) provided centrally of the second and fourth sealing sub-panels (32, 34) to form respective pairs of sub-sub-panels, further fold lines (16, 17) extending transversely of said other fold lines (7, 8) and dividing the second and fourth obturating sub-panels (22, 24) into sub-sub-panels, said further fold lines comprising fold lines (16, 17) extending from the centre of that edge region of each of the second and fourth obturating sub-panels (22, 24) furthest from the middle of its panel (2, 4) to those corner zones of the sub-panel (22, 24) furthest from said edge region, lines of weakness (20) in the second panel (2) extending from locations in its uppermost edge region adjacent the corner regions among the first, second and third sealing sub-panels (31-33) to that edge region of the second obturating sub-panel nearest to the middle of the second panel (2), whereby the portions of said second sealing sub-panel (32) and said second obturating sub-panel (22) between said lines of weakness (20) can be pulled outwardly about said lines of weakness (20) to provide a pouring spout, and a continuous seal comprised of adhesion between surface portions of said first, second, third and fourth sealing sub-panels (31-34) and including adhesion in said corner regions, characterized in that the adhesion extends along the internal surface of said second sealing sub-panel (32) from the corner regions between the first, second and third sealing sub-panels (31-33) to, but not beyond, substantially said lines of weakness (20), and that there is substantially no adhesion between those remaining portions of the internal surface of the second sealing sub-panel (32), on the one hand, and the internal surfaces of the first and third sealing sub-panels (31, 33) on the other hand.

4. A carton comprising a loop of first, second, third and fourth panels (1-4) arranged around the carton and interconnected by fold lines (6) and an upwardly extending sealing seam, other fold lines (7, 8) extending around the carton and dividing the panels (1-4) into loops of sun-panels (21-24, 31-34) arranged around the carton, the loops of sub-panels including a higher loop of top closure sealing sub-panels (31-34) forming a sealing fin (60) and a lower loop of first, second, third and fourth top closure obturating sub-panels (21-24) for obturating·the top of the carton, upwardly extending fold lines (18) provided· centrally of the second and fourth sealing sub-panels (32, 34) to form respective pairs of sub-sub-panels, further fold lines (16, 17) extending transversely of said other fold lines (7, 8) and dividing the second and fourth obturating sub-panels (22, 24) into sub-sub-panels, said further fold lines comprising fold lines (16, 17) extending from the centre of that edge region of each of the second and fourth obturating sub-panels (22, 24) furthest from the middle of its panel (2, 4) to those corner zones of the sub-panel (22, 24) furthest from said edge region, lines of weakness (20) in the second panel (2) extending from locations in its uppermost edge region adjacent the corner regions among the first, second and third sealing sub-panels (31-33) to that edge region of the second obturating sub-panel (22) nearest to the middle of the second panel (2), whereby the portions of said second sealing sub-panel (32) and said second obturating sub-panel 22) between said lines of weakness (20) can be pulled outwardly  about said lines of weakness (20) to provide a pouring spout, and a continuous seal comprised of adhesion between surface portions of said first, second, third and fourth sealing sub-panels (31-34) and including adhesion in said corner regions, characterized in that, with said spout in a fully opened condition, the adhesion in said corner regions remains intact.

22.

5. An apparatus for use in sealing a top closure of a carbon, comprising heating means (40,50,101,102) for heating internal thermoplastics surface portions of said top closure including internal corners at upwardly extending fold lines (6) of said top closure, said heating means including nozzle means (45,104) arranged to direct hot gaseous jets into said corners, characterised in that said nozzle means (45,104) is arranged to be received in said carton (C).

6. A method of sealing a top closure of a carton, including heating internal thermoplastics surface portions of said top closure including internal corners at upwardly extending fold lines (6) of said top closure, said heating including directing hot gaseous jets into said corners from nozzle means (45,104), characterised in that siad nozzle means (45,104) is received in said carton (C) during said directing.

7. An apparatus for use in sealing a top closure of a carbon which closure incorporates wall means (22,32) for forming a pouring spout, characterised in that it comprises heating means (40,50,101,102) arranged to heat selected thermoplastics surface portions of said top closure including thermoplastics external surface portions of said wall means (22,32) and pressure sealing means (213) of a pressure sealing stage (207) arranged to press said selected thermoplastics surface portions and said thermoplastics external surface portions together while these surface portions are tacky, characterised in that said heating means (40,50,101,102) comprises first heating means (40, 101) of a first heating stage arranged to heat said selected thermoplastics surface portions of said top closure but not substantially to heat said thermoplastics external surface portions and thermoplastics internal surface portions of said wall means, and final heating means (5o,102) of a final heating stage arranged to heat said selected thermoplastics surface portions to render these surface portions tacky and also to heat said thermoplastics external surface portions to render these surface portions tacky but not substantially to heat said thermoplastics internal surface portions.

8.   A method of sealing a top closure of a carton which closure incorporates wall means (22,32) for forming a pouring spout, comprising heating selected thermoplastics surface portions of said top closure including thermoplastics external surface portions of said wall means (22,32) and pressing these surface portions together while they are tacky, characterised in that said heating comprises, at a first heating stage, heating said selected thermoplastics surface portions of said top closure but not substantially heating said thermoplastics external surface portions and thermoplastics internal surface portions of said wall means, and, at a final heating stage, heating said selected thermoplastics surface portions so as to render these surface portions tacky and also heating said thermoplastics external surface portions so as to render these surface portions tacky but not substantially heating said thermoplastics internal surface portions.

1/10

FIG.1.

FIG.2.

FIG.3.

FIG.4.

FIG.5.

FIG.6.

Fig. 7.

FIG. 8.

0028941

FIG. 9.

FIG. 10.

FIG. 11.

0028941

_FIG. 12._

_FIG. 13._

_FIG. 14._

22·12·80

0028941

FIG. 15.

FIG. 18.

FIG. 19.

FIG. 20.

0028941

Fig. 16.

FIG. 17.

European Patent Office

**EUROPEAN SEARCH REPORT**

Application number

EP 80304051.8

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| | US - A - 3 327 920 (HYNES D.A.)<br>+ Fig. 1-3 +<br>-- | 3 | B 65 B 7/18<br>B 65 D 5/08<br>B 65 D 5/70 |
| A | US - A - 3 525 194 (INT.PAPER COMP.)<br>-- | | |
| A | US - A - 3 334 799 (EX-CELL-O CORP.)<br>-- | | |
| A | US - A - 3 270 940 (EX-CELL-O CORP.)<br>+ Fig. 14 +<br>---- | | **TECHNICAL FIELDS SEARCHED (Int.Cl. ³)**<br><br>B 65 B 7/00<br>B 65 B 51/00<br>B 65 D 5/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>VIENNA | Date of completion of the search<br>03-02-1981 | Examiner<br>JANC | |

EPO Form 1503.1 06.78